# EUROPEAN PATENT APPLICATION

(11) **EP 4 657 261 A1**
(43) Date of publication of application: **03.12.2025**
(21) Application number: 24179268.8
(22) Date of filing: 31.05.2024
(51) Int. Cl.: G06F 11/07, G06F 11/34

(54) **SYSTEM AND METHOD FOR ERROR LOG TRIAGING**

(71) Applicant: Siemens Aktiengesellschaft, 80333 München (DE)
(72) Inventor: Kumar, Ashish, 835222 Ranchi, Jharkhand (IN)
(74) Representative: Isarpatent

(57) **Abstract**

A computer-implemented method for error log triaging is described. The method comprises receiving a log file indicative of a bug report and predicting, using a classification model, a class associated with the received log file. The method comprises identifying, using a recommendation model, one or more comparable historical bugs based on the predicted class and a resolution mapping associated with the one or more comparable historical bugs. The method comprises generating, based on an explainability of an Artificial Intelligence (Al) model, a first explanation report associated with the predicted class and a second explanation report associated with the identified one or more comparable historical bugs. The method comprises transmitting, the predicted class, the identified one or more comparable historical bugs, the first explanation report, and the second explanation report for display on a display unit of a user device associated with a triaging manager to facilitate error log triaging.

## Description

The present invention generally relates to bug report analysis, and more particularly relates to a system and a method for error log triaging.

In current digital environments, various systems are used to aid users in making informed choices. For instance, systems are used for fixing a bug for a given bug report or more error log triaging. Recommendations systems may be used for assisting users to fix bugs.

One example of a currently used system is manual triaging. In manual triaging, human experts manually review and categorize bugs or log errors based on their severity, impact, and priority. It relies on the expertise and experience of the manual users to assign appropriate tags or labels to each issue.

Another example of a currently used system is Machine Learning (ML) techniques that involve training machine learning models on labeled datasets representing the desired triage categories. For instance, Latent Dirichlet allocation (LDA) based approach, Markov Decision Process (MDP) model, or deep reinforcement learning models are employed. Further, cluster analysis techniques can be used to group similar bugs or log errors together based on their shared characteristics.

However, such systems can be considered as black box systems. The problems of the existing systems include lack of trustworthiness and lack of explainability. Users find it difficult to trust the outputs of such systems. For instance, such systems do not inform users regarding what error has happened in an application and various details regarding the errors. Further, such systems do not allow users to easily find information about the errors and interact with the bug files.

Accordingly, there is a need for a system and a method to overcome the above-identified issues.

According to one embodiment of the present invention, a system for error log triaging is described. The system comprises a memory and one or more processors communicatively coupled to the memory, wherein the memory comprises programmable instructions which, when executed by the one or more processors, cause the one or more processors to: receive a log file indicative of a bug report; predict, using a classification model, a class associated with the received log file; identify, using a recommendation model, one or more comparable historical bugs based on the predicted class and a resolution mapping associated with the one or more comparable historical bugs; generate, based on an explainability of an Artificial Intelligence (Al) model, a first explanation report associated with the predicted class and a second explanation report associated with the identified one or more comparable historical bugs; and transmit, the predicted class, the identified one or more comparable historical bugs, the first explanation report, and the second explanation report for display on a display unit of a user device associated with a triaging manager to facilitate error log triaging.

In an embodiment, to predict the class associated with the received log file, the one or more processors are configured to identify one or more signatures associated with the received log file, wherein the one or more signatures include influential words, sentences, and paragraphs in the received log file. Further, the one or more processors are configured to predict the class using the classification model based on the identified one or more signatures.

In an embodiment, the one or more processors are further configured to identify historical signatures associated with the one or more comparable historical bugs. Further, the one or more processors are configured to generate a consensus report based on a comparison of the identified one or more signatures and the identified historical signatures. Further, the one or more processors are configured to determine a confidence score based on the comparison of the identified one or more signatures and the identified historical signatures. Further, the one or more processors are configured to transmit the consensus report and the confidence score for display on the display unit.

In an embodiment, the one or more processors are further configured to receive a query associated with one or more of the predicted class, the identified one or more comparable historical bugs, the first explanation report, and the second explanation report from the triaging manager via the display unit. Further, the one or more processors are configured to identify, from a vector database, an output for the received query based on semantic similarity of the received query with respect to data stored in the vector database. Further, the one or more processors are configured to generate a response for the output based on a Large Language Model (LLM) model. Further, the one or more processors are configured to transmit the generated response for display on the display unit.

In an embodiment, the classification model and the recommendation model are trained on a historical dataset comprising labeled data associated with historical bugs and associated resolutions. In an embodiment, the one or more processors are further configured to add the bug report associated with the received log file in the historical data via a feedback loop.

In an embodiment, to identify the one or more comparable historical bugs, the one or more processors are configured to perform a sematic search on a vector database. In an embodiment, the classification model is a Sequential S3 (Smoothness, Significance and Sanction) (SS3) model.

According to another embodiment of the present invention, a computer-implemented method for error log triaging is described. The method comprises receiving a log file indicative of a bug report. Further, the method comprises predicting, using a classification model, a class associated with the received log file. Further, the method comprises identifying, using a recommendation model, one or more comparable historical bugs based on the predicted class and a resolution mapping associated with the one or more comparable historical bugs. Further, the method comprises generating, based on an explainability of an Artificial Intelligence (Al) model, a first explanation report associated with the predicted class and a second explanation report associated with the identified one or more comparable historical bugs. Further, the method comprises transmitting, the predicted class, the identified one or more comparable historical bugs, the first explanation report, and the second explanation report for display on a display unit of a user device associated with a triaging manager to facilitate error log triaging.

In an embodiment, predicting the class associated with the received log file comprises identifying one or more signatures associated with the received log file, wherein the one or more signatures include influential words, sentences, and paragraphs in the received log file, and predicting the class using the classification model based on the identified one or more signatures.

In an embodiment, the method further comprises identifying historical signatures associated with the one or more comparable historical bugs; generating a consensus report based on a comparison of the identified one or more signatures and the identified historical signatures; determining a confidence score based on the comparison of the identified one or more signatures and the identified historical signatures; and transmitting the consensus report and the confidence score for display on the display unit.

In an embodiment, the method further comprises receiving a query associated with one or more of the predicted class, the identified one or more comparable historical bugs, the first explanation report, and the second explanation report from the triaging manager via the display unit; identifying, from a vector database, an output for the received query based on semantic similarity of the received query with respect to data stored in the vector database; generating a response for the output based on a Large Language Model (LLM) model; and transmitting the generated response for display on the display unit.

In an embodiment, the classification model and the recommendation model are trained on a historical dataset comprising labeled data associated with historical bugs and associated resolutions. In an embodiment, the method further comprises adding the bug report associated with the received log file in the historical data via a feedback loop.

In an embodiment, identifying the one or more comparable historical bugs comprises performing a sematic search on a vector database. In an embodiment, the classification model is a Sequential S3 (Smoothness, Significance and Sanction) (SS3) model.

According to another embodiment of the present invention, an environment is disclosed. The environment includes a system, as discussed throughout the present invention and a user device associated with the triaging manager and communicatively coupled to the system via a network. The system is configured to perform one or more methods, as discussed throughout the present invention.

According to another embodiment of the present invention, a computer-program product is disclosed. The computer-program product has machine-readable instructions stored therein, that when executed by one or more processors, cause the one or more processors to perform one or more methods, as discussed throughout the present invention.

According to another embodiment of the present invention, a non-transitory computer-readable medium is disclosed. The non-transitory computer-readable medium is encoded with executable instructions, that when executed by one or more processors, cause the one or more processors to perform one or more methods, as discussed throughout the present invention.

To further clarify the advantages and features of the present invention, a more particular description of the invention will be rendered by reference to specific embodiments thereof, which are illustrated in the appended drawings. It is appreciated that these drawings depict only typical embodiments of the invention and are therefore not to be considered limiting of its scope. The invention will be described and explained with additional specificity and detail in the accompanying drawings.

These and other features, aspects, and advantages of the present invention will become better understood when the following detailed description is read with reference to the accompanying drawings in which like characters represent like parts throughout the drawings, wherein:
**FIG. 1** illustrates an environment comprising a system for error log triaging, according to an embodiment of the present invention;
**FIG. 2** illustrates a detailed block diagram of the environment, according to an embodiment of the present invention;
**FIG. 3** illustrates an exemplary schematic diagram of a recommendation model, according to an embodiment of the present invention;
**FIG. 4** illustrates a flow diagram associated with error log triaging, according to an embodiment of the present invention;
**FIGS. 5A-5B** illustrate exemplary process flows depicting a method for error log triaging, according to an embodiment of the present invention;

Further, skilled artisans will appreciate that elements in the drawings are illustrated for simplicity and may not have necessarily been drawn to scale. For example, the flow charts illustrate the method in terms of the most prominent steps involved to help improve understanding of aspects of the present invention. Furthermore, in terms of the construction of the device, one or more components of the device may have been represented in the drawings by conventional symbols, and the drawings may show only those specific details that are pertinent to understanding the embodiments of the present invention so as not to obscure the drawings with details that will be readily apparent to those of ordinary skill in the art having the benefit of the description herein.

For the purpose of promoting an understanding of the principles of the invention, reference will now be made to the various embodiments and specific language will be used to describe the same. It will nevertheless be understood that no limitation of the scope of the invention is thereby intended, such alterations and further modifications in the illustrated system, and such further applications of the principles of the invention as illustrated therein being contemplated as would normally occur to one skilled in the art to which the invention relates.

It will be understood by those skilled in the art that the foregoing general description and the following detailed description are explanatory of the invention and are not intended to be restrictive thereof.

Reference throughout this specification to "an aspect", "another aspect" or similar language means that a particular feature, structure, or characteristic described in connection with the embodiment is included in at least one embodiment of the present invention. Thus, appearances of the phrase "in an embodiment", "in another embodiment" and similar language throughout this specification may, but do not necessarily, all refer to the same embodiment.

The terms "comprises", "comprising", or any other variations thereof, are intended to cover a non-exclusive inclusion, such that a process or method that comprises a list of steps does not include only those steps but may include other steps not expressly listed or inherent to such process or method. Similarly, one or more devices or sub-systems or elements or structures or components proceeded by "comprises... a" does not, without more constraints, preclude the existence of other devices or other sub-systems or other elements or other structures or other components or additional devices or additional sub-systems or additional elements or additional structures or additional components.

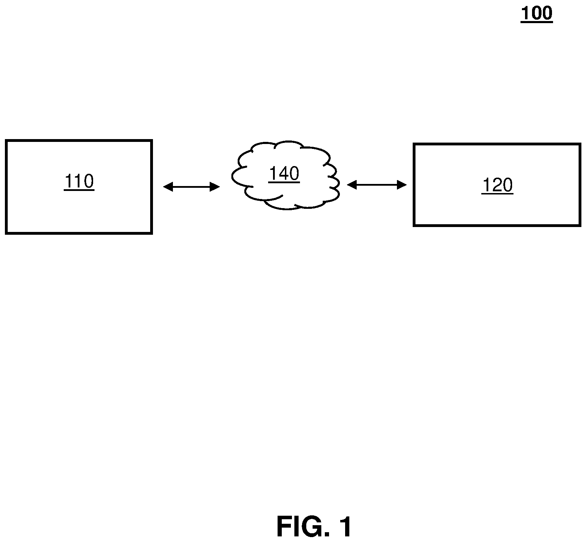

**FIG. 1** illustrates an overview of an environment 100 comprising a system 110 for error log triaging. The system 110 provides trustworthiness and explainability in the field of error log triaging. A complete end-to-end deployable system is provided that can be used across various devices and is scalable.

The environment 100 further comprises a user device 120 in communication with the system 110. The environment 100 may include additional user devices as well in addition to the user device 120, and the details provided for the user device 120 are equally applicable for the other user devices as well.

The user device 120 may be in communication with the system 110 via a network 140. In an embodiment, the system 110 is a cloud-based system, such as a cloud server. In such an embodiment, the functionality of the system 110 is provided by the cloud server, and the details provided with respect to the system 110 would be applicable for the cloud server. In another embodiment, the system 110 is hosted on one or more electronic devices, such as, but not limited to, a laptop computer, a desktop computer, a smartphone, and the like. In an embodiment, the system 110 is hosted on the user device 120. In an embodiment, the system 110 is provided in a distributed manner, in that, one or more components and/or functionalities of the system 110 are provided through an electronic device or a cloud unit.

In an embodiment, the network 140 includes a wireless network or a wired network. For example, the network 140 corresponds to a wireless communication network that allows communication between the system 110 and the user device 120.

It is appreciated that although a single system 110 is depicted in FIG. 1, the environment 100 can include additional systems. The details provided in the present disclosure for the system 110 are equally applicable to the additional systems.

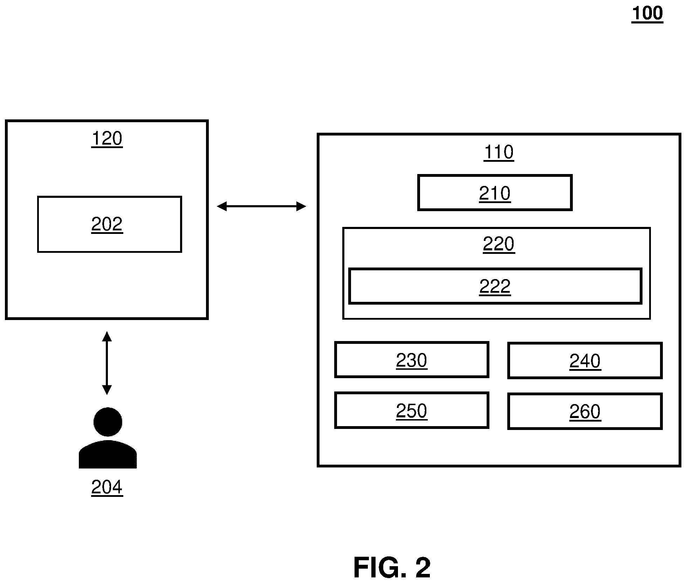

**FIG. 2** illustrates a detailed block diagram of the environment 100.

The user device 120 may be associated with a triaging manager. The user device 120 may include a display unit 202 facilitating display of information to the triaging manager 204.

The system 110 includes one or more processors 210 and a memory 220. As a non-limiting example, the one or more processors 210 are a single processing unit or a set of units each including multiple computing units. The one or more processors 210 are implemented as one or more microprocessors, microcomputers, microcontrollers, digital signal processors, central processing units, state machines, logic circuitries, and/or any devices that manipulate signals based on operational instructions (computer-readable instructions) stored in the memory 220. Among other capabilities, the one or more processors 210 are configured to fetch and execute computer-readable instructions and data stored in the memory 220. The one or more processors 210 include one or a plurality of processors. The plurality of processors are further implemented as a general-purpose processor, such as a central processing unit (CPU), an application processor (AP), or the like, a graphics-only processing unit, such as a graphics processing unit (GPU), a visual processing unit (VPU), and/or an Al-dedicated processor such as a neural processing unit (NPU). The plurality of processors control the processing of the input data in accordance with a predefined operating rule or an artificial intelligence (AI) model stored in the memory 220. The predefined operating rule or the AI model is provided through training or learning.

The one or more processors 210 are disposed in communication with one or more input/output (I/O) devices via an Input/Output (I/O) interface. The I/O interface employs communication code-division multiple access (CDMA), highspeed packet access (HSPA+), global system for mobile communications (GSM), long-term evolution (LTE), WiMax, or the like, etc. In another embodiment of the present invention, the I/O interface employs ethernet, industrial wireless Local Area Network (LAN), Process Field Bus (PROFIBUS), Actuator Sensor (AS) Interface, and the like.

In some embodiments, the memory 220 is communicatively coupled to the one or more processors 210. The memory 220 is configured to store instructions executable by the one or more processors 210. In one embodiment, the memory 220 communicates via a bus within the system 110. The memory 220 includes, but is not limited to, a non-transitory computer-readable storage media, such as various types of volatile and non-volatile storage media including, but not limited to, random access memory, read-only memory, programmable read-only memory, electrically programmable read-only memory, electrically erasable read-only memory, flash memory, magnetic tape or disk, optical media and the like. In one example, the memory includes a cache or random-access memory (RAM) for the one or more processors 210.

In alternative examples, the memory 220 is separate from the one or more processors 210 such as a cache memory of a processor, the system memory, or other memory. The memory 220 is an external storage device or a database for storing data. The memory 220 is operable to store instructions executable by the one or more processors 210. The functions, acts, or tasks illustrated in the figures or described are performed by the programmed processor for executing the instructions stored in the memory 220. The functions, acts, or tasks are independent of the particular type of instruction set, storage media, processor or processing strategy and may be performed by software, hardware, integrated circuits, firmware, micro-code, and the like, operating alone or in combination. Likewise, processing strategies include multiprocessing, multitasking, parallel processing, and the like.

The memory 220 includes a database 222 to store data, for instance, historical data. The memory 220 further includes an operating system for performing one or more tasks of the system 110, as performed by a generic operating system. In one embodiment, the database 222 is configured to store historical data associated with historical bugs, historical signatures, and the like.

In a non-limiting example, the database 222 is provided through the cloud storage and the one or more processors 210 are integrated with an electronic device.

Further, the present invention also contemplates a computer-program product that includes instructions or receives and executes instructions responsive to a propagated signal. Further, the instructions are transmitted or received over the network via a communication port or interface or using a bus (not shown). The communication port or interface may be a part of the one or more processors 210 or may be a separate component. The communication port may be created in software or may be a physical connection in hardware. The communication port may be configured to connect with the network, external media, the display, or any other components in the system 110. The connection with the network may be a physical connection, such as a wired ethernet connection, or may be established wirelessly. Likewise, the additional connections with other components of the system 110 may be physical or may be established wirelessly. The network may alternatively be directly connected to the bus. For the sake of brevity, the architecture, and standard operations of the memory 220 and the one or more processors 210 are not discussed in detail.

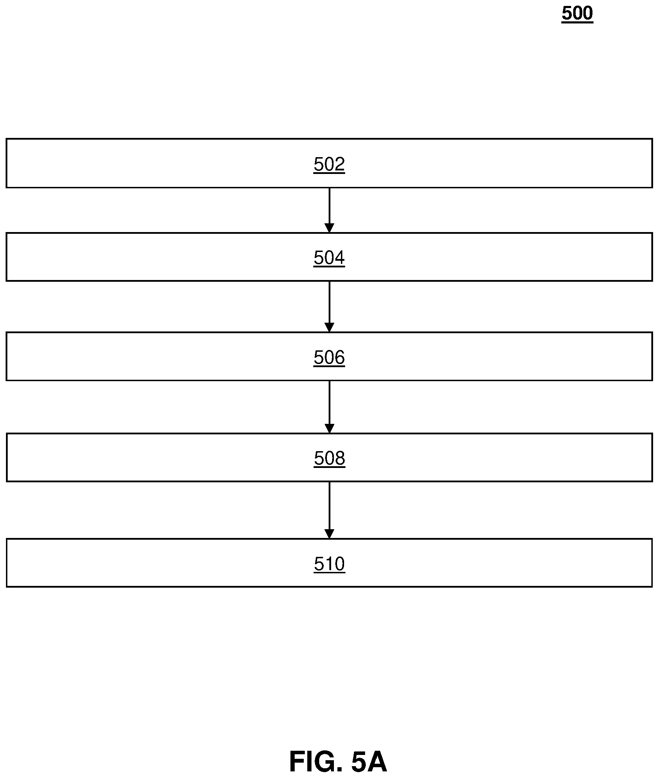

In an embodiment, the computer-program product, having machine-readable instructions stored therein, when executed by one or more processors 210, causes the one or more processors 210 to perform a method of error log triaging. The details on the method(s) performed by the one or more processors 210 have been elaborated in subsequent paragraphs at least with reference to FIGS. 5A-5B.

Further, the present invention also contemplates a non-transitory computer-readable medium encoded with executable instructions. The executable instructions, when executed by one or more processors 210, cause the one or more processors 210 to perform a method for error log triaging. The details on the method(s) performed by the one or more processors 210 have been elaborated in subsequent paragraphs at least with reference to FIGS. 5A-5B. Examples of computer-readable mediums include nonvolatile, hard-coded type mediums such as read-only memories (ROMs) or erasable, electrically programmable read-only memories (EEPROMs), and user-recordable type mediums such as floppy disks, hard disk drives and compact disk read-only memories (CD-ROMs) or digital versatile disks (DVDs).

Referring collectively to FIGS. 1-2, the one or more processors 210 are configured to receive a log file indicative of a bug report. The log file is received from the user device 120. The log file and the bug report include a record of events or issues that occur within an application or a software/hardware infrastructure. The log file capture information such as errors, warnings, transactions, system events, etc. The bug report indicates issues encountered in applications or software infrastructure.

The one or more processors 210 are configured to predict a class associated with the received log report. The one or more processors 210 may use a classification model 230 of the system 110 to predict the class associated with the received log report. In particular, the one or more processors 210 are configured to identify one or more signatures associated with the received log file. The one or more signatures include influential words, sentences, and paragraphs in the received log file.

Based on the one or more signatures associated with the received log file, the classification model 230 predicts the class associated with the received log report. In an embodiment, the classification model 230 is trained on a historical dataset stored in the database 222. The historical data comprises labeled data associated with historical bugs and associated resolutions.

The system 110 further includes a recommendation model 240. The one or more processors 210 are configured to identify one or more comparable historical bugs based on the predicted class using the recommendation model 240. Further, the one or more processors 210 are configured to identify a resolution mapping associated with the one or more comparable historical bugs using the recommendation model 240.

In an embodiment, the recommendation model 240 is trained on a historical dataset stored in the database 222 including labeled data associated with historical bugs and associated resolutions. In an embodiment, the classification model is a Sequential S3 (Smoothness, Significance and Sanction) (SS3) model.

In an embodiment, the one or more processors 210 are configured to perform a sematic search on a vector database to identify the one or more comparable historical bugs. The vector database may be configured to store embedding of all the historical logs with their associated metadata. In an embodiment, the vector database may be a part of the database 222. Accordingly, new bug reports are used to perform a sematic search on the vector database in order to identify historical similar log and the associated solutions from the vector database.

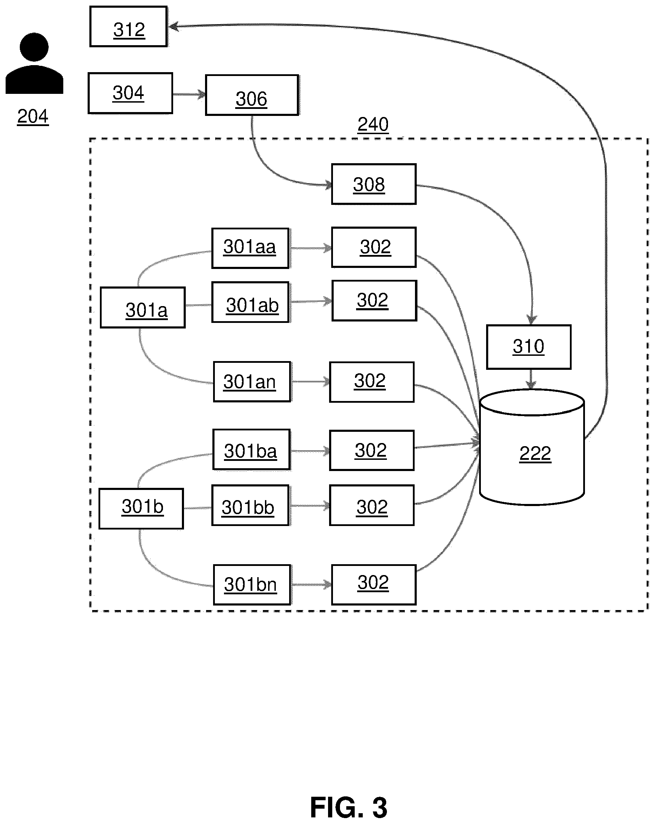

Referring to **FIG. 3****,** an exemplary schematic diagram of a recommendation model 240 is depicted. The recommendation model 240 employs embedding technique in addition to cleaning and structuring for features. Cosine similarity can be used to fetch the most similar bug from the database 222 (vector database) using semantic search. In FIG. 3A, numerals 301a, 301b represent document 1 and document 2 respectively. Further, 301aa, 301ab, and 301an represent chunks associated with document 1. Further, 301ba, 301bb, and 301bn represent chunks associated with document 2. Each of the chunks are associated with corresponding embeddings, represented by numerals 302. The embeddings 302 are further associated with the database 222.

Block 304 represents a new bug that is pre-processed at block 306. Block 308 represents question embeddings and block 310 represents semantic search of the database 222. Accordingly, the most similar bug can be identified, as depicted at block 312.

Referring again to FIGS. 1-2, the system 110 includes an Artificial Intelligence (Al) model 250. The one or more processors 210 are further configured to generate a first explanation report associated with the predicted class based on an explainability of the AI model 250. The one or more processors 210 are further configured to generate a second explanation report associated with the identified one or more comparable historical bugs based on an explainability of the AI model 250.

Once the first explanation report and the second explanation report are generated, the one or more processors 210 are configured to transmit, the predicted class, the identified one or more comparable historical bugs, the first explanation report, and the second explanation report for display on the display unit 202 of the user device 120 associated with the triaging manager 204. Thus, error log triaging is facilitated for the triaging manager 204.

In an embodiment, the one or more processors 210 are configured to identify historical signatures associated with the one or more comparable historical bugs. Further, the one or more processors 210 are configured to generate a consensus report based on a comparison of the identified one or more signatures and the identified historical signatures. The identified one or more signatures of the subject log (log file) and the identified historical signatures are considered for generating the consensus report.

Further, the one or more processors 210 are configured to determine a confidence score based on the comparison of the identified one or more signatures and the identified historical signatures. Further, the one or more processors 210 are configured to transmit the consensus report and the confidence score for display on the display unit. This ensures that both logs are from the same class and have meet a certain confidence score. If similar log in history is not available (which is identified using the confidence score), then there is the requirement of adding some logs in historical dataset to train and enhance the system 110.

In an embodiment, the one or more processors 210 are further configured to receive a query from the triaging manager 204. The query is associated with one or more of the predicted class, the identified one or more comparable historical bugs, the first explanation report, and the second explanation report. The query is received from the triaging manager via the display unit 202 of the device 120.

The system 110 includes a Large Language Model (LLM) model 260. The one or more processors 210 are configured to identify, from a vector database, an output for the received query based on semantic similarity of the received query with respect to data stored in the vector database. Further, the one or more processors 210 are configured to generate a response for the output based on the LLM model 260. In an embodiment, the LLM model may be associated with an accessible and easy to use interface deploying voice to text technology and/or chatbots for interacting with the log file, i.e., for explainability and more information regarding the log file.

The generated response can then be transmitted for display on the display unit 202. This enables the triaging manager 204 to view response to the provided query. The triaging manager 204 can thus ask queries to understand how the predictions and recommendations are arrived at by the system 110. User trust and explainability of the AI model 250 is thus enhanced and support for decision making is provided.

In an embodiment, the one or more processors are configured to add the bug report associated with the received log file in the historical dataset in the database 222 via a feedback loop. With the feedback loop, new bug reports can be included in historical dataset in the database 222 once resolved successfully. In this way, the system 110 will learn more patterns with time.

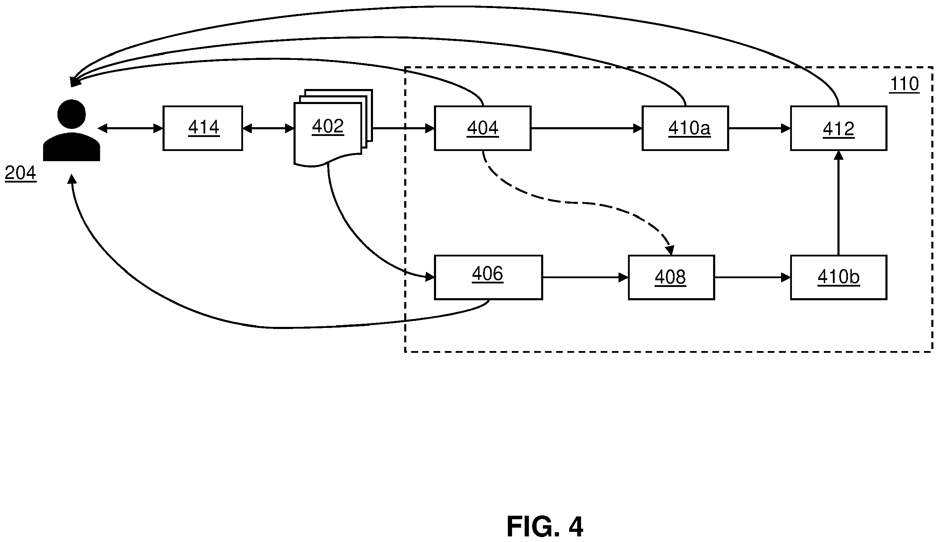

**FIG. 4** illustrates a flow diagram associated with error log triaging. At block 402, a new bug report is received. The triaging manager 204 may want to analyse the bug report. The bug report is sent to the system 110. At block 404, the classification model 230 predicts a class associated with the received log report. Further, the classification model 230 identifies one or more signatures associated with the received log file.

At block 406, the recommendation model 240 identifies one or more comparable historical bugs based on the predicted class and a resolution mapping associated with the one or more comparable historical bugs using the recommendation model. At block 408, the most similar historical bug consensus with the predicted class is obtained. At blocks 410a, the first explanation report associated with the predicted class is generated based on an explainability of the AI model 250. At block 410b, the second explanation report associated with the one or more comparable historical bugs is generated based on an explainability of the AI model 250. The first and second explanation reports are shared with the triaging manager 204.

At block 412, a consensus report is generated based on a comparison of the identified one or more signatures and the identified historical signatures. The consensus report indicates influential signatures to build trust and assist the human in loop, i.e., the triaging manager 204. Further, at block 414, the triaging manager 204 may interact with the bug file in order to obtain more information. For instance, the triaging manager 204 may send a query via a chatbot. The LLM model 260 may process the query and generate an output for the received query based on semantic similarity of the received query with respect to data stored in the vector database. The output is provided to the user, thereby facilitating explainability and more information regarding the bug file.

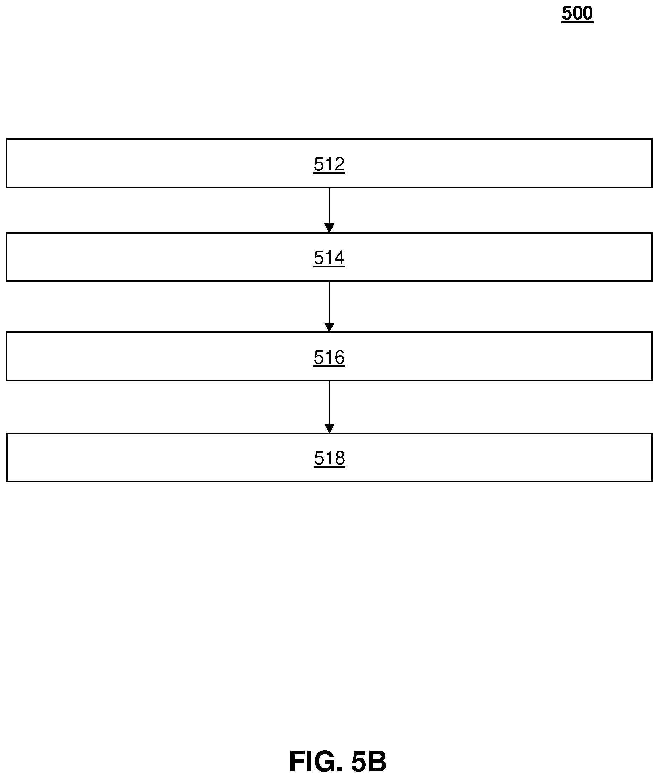

**FIG. 5** illustrates a process flow depicting a method 500 for error log triaging by the system 110. The method 500 is performed by the system 110. In an embodiment, the method 500 is performed by one or more processors 210 of the system 110.

At step 502, the method 500 comprises receiving a log file indicative of a bug report.

At step 504, the method 500 comprises predicting, using the classification model 230, a class associated with the received log file.

In an embodiment, predicting the class associated with the received log file comprises identifying one or more signatures associated with the received log file, wherein the one or more signatures include influential words, sentences, and paragraphs in the received log file. The method further comprises predicting the class using the classification model based on the identified one or more signatures.

At step 506, the method 500 comprises identifying, using the recommendation model 240, one or more comparable historical bugs based on the predicted class and a resolution mapping associated with the one or more comparable historical bugs.

In an embodiment, identifying the one or more comparable historical bugs comprises performing a sematic search on a vector database, such as database 222.

At step 508, the method 500 comprises generating, based on an explainability of the AI model 250, a first explanation report associated with the predicted class and a second explanation report associated with the identified one or more comparable historical bugs.

At step 510, the method 500 comprises transmitting, the predicted class, the identified one or more comparable historical bugs, the first explanation report, and the second explanation report for display on the display unit 202 of the user device 120 associated with the triaging manager 204 to facilitate error log triaging.

In an embodiment, the method further comprises identifying historical signatures associated with the one or more comparable historical bugs. Further, the method comprises generating a consensus report based on a comparison of the identified one or more signatures and the identified historical signatures. Further, the method comprises determining a confidence score based on the comparison of the identified one or more signatures and the identified historical signatures. Further, the method comprises transmitting the consensus report and the confidence score for display on the display unit.

In an embodiment, the method 500 may further include steps 512-518, as depicted in **FIG. 5B****.** At step 512, the method 500 comprises receiving a query associated with one or more of the predicted class, the identified one or more comparable historical bugs, the first explanation report, and the second explanation report from the triaging manager 204 via the display unit 202. Further, at step 514, the method comprises identifying, from a vector database, an output for the received query based on semantic similarity of the received query with respect to data stored in the vector database. Further, at step 516, the method comprises generating a response for the output based on the LLM model 260. Further, at step 518, the method comprises transmitting the generated response for display on the display unit 202.

In an embodiment, the method 500 further comprises adding the bug report associated with the received log file in the historical data via a feedback loop.

While the above steps shown in FIGS. 5A-5B are described in a particular sequence, the steps may occur in variations to the sequence in accordance with various embodiments of the present invention. Further, the details related to various steps of FIGS. 5A-5B, which are already covered in the description related to FIGS. 1-3 are not discussed again in detail here for the sake of brevity.

As described above, the present invention provides a trustworthy and explainable system and method for error log triaging. Once a new bug report is available to the triaging manager for ticket allocation, the report is sent to the system. Using the classification and recommendation models, the explanation of the predictions are generated. Using the classification model, signatures such as influential words, sentences, paragraphs, etc. of the log will be considered. Using the recommendation model, the signature of the most similar historical bug will be considered. A consensus of both will be presented to the triaging manager to make sense of the prediction. Thus, for decision making, the triaging manager will have the information on class to allocate the ticket to suitable developer based on explainability of prediction, consensus based trustworthy system, and recommendations if most similar log have some mapping of resolution done in past. A chatbot-based interaction engine is thus provided for triaging managers to easily find information about the input log file.

While specific language has been used to describe the present subject matter, any limitations arising on account thereto, are not intended. As would be apparent to a person in the art, various working modifications may be made to the method in order to implement the inventive concept as taught herein. The drawings and the foregoing description give examples of embodiments. Those skilled in the art will appreciate that one or more of the described elements may well be combined into a single functional element. Alternatively, certain elements may be split into multiple functional elements. Elements from one embodiment may be added to another embodiment.

### List of Reference Numerals

- 100: Environment
- 110: System
- 120: User Device
- 140: Network
- 202: Display Unit
- 204: Triaging Manager
- 210: Processor(s)
- 220: Memory
- 222: Database
- 230: Classification model
- 240: Recommendation model
- 250: AI model
- 260: LLM model
- 301a: Document 1
- 301aa-301 an: Chunks associated with Document 1
- 301b: Document 2
- 301ba-301 bn: Chunks associated with Document 2
- 302: Embeddings
- 304: New Bug
- 306: Pre-processing of new bug
- 308: Question embeddings
- 310: Semantic search of the database
- 312: Most similar bug
- 402-412: Blocks for error log triaging
- 500: Method

## Claims

1. A system for error log triaging, the system comprising:
a memory; and
one or more processors communicatively coupled to the memory, wherein the memory comprises programmable instructions which, when executed by the one or more processors, cause the one or more processors to:
receive a log file indicative of a bug report;
predict, using a classification model, a class associated with the received log file;
identify, using a recommendation model, one or more comparable historical bugs based on the predicted class and a resolution mapping associated with the one or more comparable historical bugs;
generate, based on an explainability of an Artificial Intelligence (Al) model, a first explanation report associated with the predicted class and a second explanation report associated with the identified one or more comparable historical bugs; and
transmit, the predicted class, the identified one or more comparable historical bugs, the first explanation report, and the second explanation report for display on a display unit of a user device associated with a triaging manager to facilitate error log triaging.

2. The system according to claim 1, wherein to predict the class associated with the received log file, the one or more processors are configured to:
identify one or more signatures associated with the received log file, wherein the one or more signatures include influential words, sentences, and paragraphs in the received log file; and
predict the class using the classification model based on the identified one or more signatures.

3. The system according to claim 2, wherein the one or more processors are further configured to:
identify historical signatures associated with the one or more comparable historical bugs;
generate a consensus report based on a comparison of the identified one or more signatures and the identified historical signatures;
determine a confidence score based on the comparison of the identified one or more signatures and the identified historical signatures; and
transmit the consensus report and the confidence score for display on the display unit.

4. The system according to claim 1, wherein the one or more processors are further configured to:
receive a query associated with one or more of the predicted class, the identified one or more comparable historical bugs, the first explanation report, and the second explanation report from the triaging manager via the display unit;
identify, from a vector database, an output for the received query based on semantic similarity of the received query with respect to data stored in the vector database;
generate a response for the output based on a Large Language Model (LLM) model; and
transmit the generated response for display on the display unit.

5. The system according to claim 1, wherein the classification model and the recommendation model are trained on a historical dataset comprising labeled data associated with historical bugs and associated resolutions, and
wherein the one or more processors are further configured to add the bug report associated with the received log file in the historical data via a feedback loop.

6. The system according to claim 1, wherein to identify the one or more comparable historical bugs, the one or more processors are configured to perform a sematic search on a vector database, and
wherein the classification model is a Sequential S3 (Smoothness, Significance and Sanction) (SS3) model.

7. A computer-implemented method for error log triaging, the method comprising:
receiving a log file indicative of a bug report;
predicting, using a classification model, a class associated with the received log file;
identifying, using a recommendation model, one or more comparable historical bugs based on the predicted class and a resolution mapping associated with the one or more comparable historical bugs;
generating, based on an explainability of an Artificial Intelligence (Al) model, a first explanation report associated with the predicted class and a second explanation report associated with the identified one or more comparable historical bugs; and
transmitting, the predicted class, the identified one or more comparable historical bugs, the first explanation report, and the second explanation report for display on a display unit of a user device associated with a triaging manager to facilitate error log triaging.

8. The computer-implemented method according to claim 7, wherein predicting the class associated with the received log file comprises:
identifying one or more signatures associated with the received log file, wherein the one or more signatures include influential words, sentences, and paragraphs in the received log file; and
predicting the class using the classification model based on the identified one or more signatures.

9. The computer-implemented method according to claim 8, further comprising:
identifying historical signatures associated with the one or more comparable historical bugs;
generating a consensus report based on a comparison of the identified one or more signatures and the identified historical signatures;
determining a confidence score based on the comparison of the identified one or more signatures and the identified historical signatures; and
transmitting the consensus report and the confidence score for display on the display unit.

10. The computer-implemented method according to claim 7, further comprising:
receiving a query associated with one or more of the predicted class, the identified one or more comparable historical bugs, the first explanation report, and the second explanation report from the triaging manager via the display unit;
identifying, from a vector database, an output for the received query based on semantic similarity of the received query with respect to data stored in the vector database;
generating a response for the output based on a Large Language Model (LLM) model; and
transmitting the generated response for display on the display unit.

11. The computer-implemented method according to claim 7, wherein the classification model and the recommendation model are trained on a historical dataset comprising labeled data associated with historical bugs and associated resolutions, and
wherein the computer-implemented method further comprises adding the bug report associated with the received log file in the historical data via a feedback loop.

12. The computer-implemented method according to claim 7, wherein identifying the one or more comparable historical bugs comprises performing a sematic search on a vector database, and
wherein the classification model is a Sequential S3 (Smoothness, Significance and Sanction) (SS3) model.

13. An environment comprising:
a system as claimed in any of claims 1-6; and
a user device associated with the triaging manager and communicatively coupled to the system via a network, wherein the system is configured to perform a method according to any of the claims 7 to 12.

14. A computer-program product, having machine-readable instructions stored therein, which when executed by one or more processors, cause the one or more processors to perform a method according to any of the claims 7 to 12.

15. A non-transitory computer readable medium encoded with executable instructions which, when executed by one or more processors, cause the one or more processors to perform a method according to any one of the claims 7 to 12.
